# EUROPEAN PATENT APPLICATION

(11) **EP 1 022 644 A1**
(43) Date of publication of application: **26.07.2000**
(21) Application number: 99115375.0
(22) Date of filing: 04.08.1999
(51) Int. Cl.: G06F 1/16

(54) **Flat panel display**

(30) Priority: 25.01.1999 US 237596
(71) Applicant: Xybernaut Corporation, Fairfax, Virginia 22033 (US)
(72) Inventor: Sallam, Hussein, Columbia, MD 21044 (US); Richard, Ng, Centreville, Virginia 20121 (US); Covin, Carol, Falls Church, Virginia 22042 (US); Kim, Jacob, Manassas, Virginia 20110 (US)
(74) Representative: Rudolph, Wolfgang

(57) **Abstract**

The flat panel display (1) including a display window (2) and control keys (3) for a mobile computer has integral therewith an audio-acoustic portion to be used when activating the computer by voice or other audio activation. Preferably this display unit (1) has a microphone (6) on one end and a speaker (4) on the other so that there is little or no sound interference with the other. There are also peripheral ports (8) and a connection (7) to the CPU of the computer being used in the same system on this display unit (1). While the display unit (1) is designed for a hands-free computer system, it may be used in any other suitable computer system.

## Description

This invention relates to a flat panel display according to the preamble of claim 1 or 2.

It is known to use various body supported computer components in mobile computer systems. In Xybernaut Corporation's voice activated wearable computers called Mobile Assistant® which are presently being commercialized world wide, a system is utilized having three main basic components. The first is a computer housing generally worn on the belt of a user; the second is a battery container also generally worn on the belt of a user, and the third is a head mounted display (HMD) worn of course on the head of a user. A microphone is peripherally attached to the HMD and extends in electrical connection to the computer housing worn on the belt. A head mounted display of the type generally used is disclosed in U.S. Patents 5,757,339 and 5,844,656.

A most commercially successful mobile computer body worn system is disclosed in U.S. patents 5,305,244; 5,719,744 and 5,844,824. In U.S. 5,305,244 a computing apparatus is disclosed which utilizes audio commands to operate a computer in a hands-free manner. This wearable computer having all of the conventional computer components (except the monitor) in a single housing. In U.S. 5,844,824 a wearable computer having various activation means is set out in addition to several other type systems usable in a body worn mode.

A novel special flat panel display would be desired usable in these same type wearable systems. There are situations where a wearable relatively uncumbersome flat panel display separate from the computer housing would be desired in this type system. This flat panel display would be worn on the user in place of (or together with) the HMD and could still provide hands-free operation of the computer system.

It is therefore the object of this invention to provide a flat panel wearable display that is devoid of the above noted disadvantages, that can be worn on the arm of the user or can fit on or in a body supported unit, can be usable in any body worn computer system, that is both left or right side wearable, having audio means integral therewith, means to read a credit card, electro-optical means to control back light and to render the display more easily readable, and means to maximize acoustics in said display structure.

The main features of the solution proposed by the invention are described in the characterizing part of claims 1 and 2. Further variations on the solution to the problem are characterized by claims 3 to 10.

Further details of the solution of the object of the invention are described in the detailed description of the embodiments. Some of advantages of the present invention are as follows:

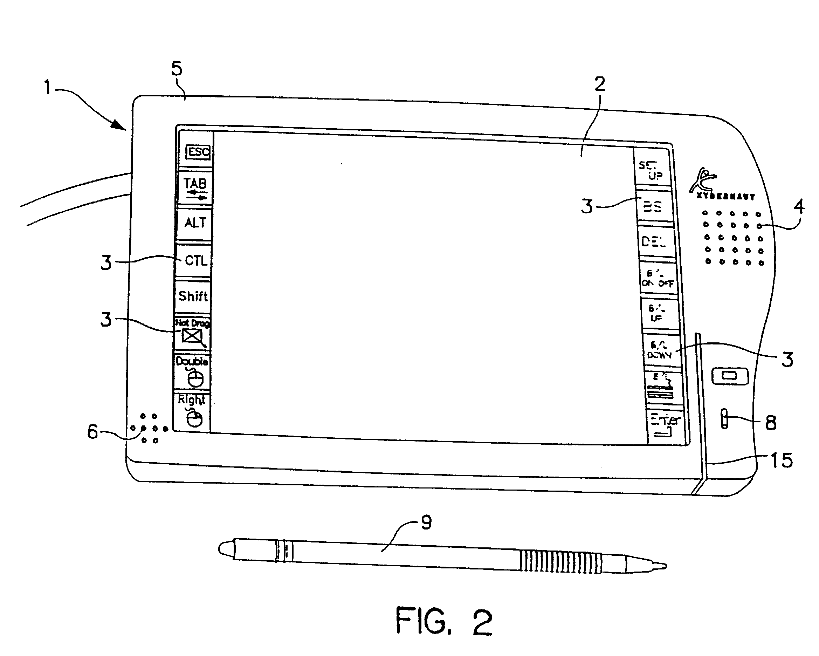

The object and other objects of this invention are accomplished by a wearable flat panel display structure having integral therewith audio means consisting of a microphone means and a speaker means. The microphone means is specifically positioned on the display structure so as to minimize or cancel echoes or sounds which may come from the speaker. The display means can be worn on the user's wrists or arm or alternatively can be carried in a pouch or holster, or worn anywhere on the user's body. It is highly preferred, however, that the flat panel display have means for attachment to a user's arm or wrist so that the system can continue to be used in a hands-free manner. The back portion of the display housing is curved so it will easily fit around a wrist when strapped thereto. The panel housing preferably is relatively small approximating the size of a paperback book; obviously, any suitable size can be used, however. The display section itself must be left- and right- wearable so as to accommodate all users. Optionally, the display housing can have means to read credit cards, similar to the system of credit card readers disclosed in U.S. Patent 5,679,943. A separate module for reading credit cards can be removably attached to the display housing or if desired the credit card reader can be integral with and part of the display housing as shown below in Figure 2.

Critical to the present invention is a flat panel wearable display having at least one of:
(A) audio means comprising a speaker means and a microphone means;
(B) positioning of the microphone and speaker components so as to minimize sound interference with either component; and optionally:
(C) curved backing so as to be easily worn on the arm or wrist;
(D) a light sensor is used to sense and then adjust the backlight to an optimal readable position. The ability to sense the amount of light and adjust the backlight and appropriate brightness is important because the backlight consumes a lot of power. Also, the light sensor will permit the display to be daylight readable and will reduce back light. This feature of (D) is similar to the electro-optical light reflection reducing means used in car mirrors and the like.
(E) with the specific configuration of the novel present flat panel display, means should be present to incorporate cellular telephone means in the same housing. This can be accomplished by adding a peripheral phone module or can be accomplished using the existing microphone and speaker as the phone mouthpiece and phone earpiece respectively of the display housing.

The flat panel display can be connected to the processor and other computer components using hard wire, wireless means, fiber optics or other suitable means. Also, the flat panel display can be used in any system disclosed in detail in U.S. Patent 5,844,824 where the flat panel display of the present invention is used in lieu of or together with the display. Also the flat panel display of this invention can be used in a system having a remote computer, i.e., one not worn.

A user having a display with activation means, a display screen and communication means is linked with a host computer either worn on the user's person, contained within the display means or remote from the person. The user would command the host computer to display a particular procedure for repairing a piece of equipment. The host computer would then search for and transmit the procedure back to the user for display on the user's flat panel display.

In the second mode, a host computer could also be responsive to several users having displays that may be working as a team to repair the piece of equipment. The users could all work from the same procedure or call for a different procedure to be displayed as an additional window in the display. In this manner team members can also use the system as a communication means between team members as a form of intercommunications as well as a means to compare findings using the graphic display capabilities of the system. It may be that information required by the team is contained in several host computers. The communication means in each display is then configured and tuned so that several hosts can be made available to each display as well as several displays operating into one host.

Obviously, the present system will function with components of several mobile computing apparatus interacting with each other. As in examples above, the display of one mobile computer can receive displays from other mobile sets or can digitize the activating means of another mobile computer.

A further feature of an embodiment of the present invention utilizes an adapter used in each mobile computer to permit the use therein of cellular or hardwire telephone communication. In place of the cellular telephone communication means, a radio frequency, infrared, laser or fiberoptic transceiver or other communication means may be used. These will generally be referred to in this disclosure as "communication means". Communication means can be accessed through the host computer or by using the display with its built-in communication capability. Thus, communication can be between display and host computers and between host computers activated by display as the control devices. A scenario of operation would be with a team of users repairing a tank. The host computer unit is positioned on the belt of the team leader. The other team members activate the host computer using their displays. One team member requires information stored on a host computer located back at the maintenance shop two miles from the repair site. This team member acquires the remote host computer at the maintenance shop using this display communication means and a cellular telephone link. The information required is referenced and viewed on this display. After obtaining the correct reference material, it is downloaded to the repair site host for other team members to utilize by viewing it in their display. Thus, local as well as remote hosts can be activated by team members' displays. Information can be then obtained from remote hosts and downloaded to the local host computer.

Team members can communicate among themselves using display to display communication links and to host computers as required. Local communications can use varied means of linking displays to host and display to display. Dispersed infrared is useful as a medium for local linking because of eavesdropping security potential, bandwidth limitations, low component cost and communication reliability.

Another option would be to use a cellular telephone link between the local host computer and a remote computer. The maintenance team member requiring the remote data uses a wireless display to link with the local team host computer. This is accomplished by the maintenance team member using a wireless display and voice activating means to dial a local cellular telephone through a digital data-to-telephone modem at the local host computer. This establishes a telephone link with the required remote computer. The link then uses commercial telephone lines to contact the required remote computer at its hardwired or cellular telephone number (local or long distance). The remote computer using its digital data-to-telephone modem establishes a modem to modem connection with the local host computer and data transmission is active. The local maintenance team member using the wireless display can now request digital data from the remote computer.

Other options for communicating with a remote computer could include laser or other communication methods that would have the required range and reliability for data transfer. The scenarios for such linkages would be similar to the above.

Integration of private as well as public telephone communications into this system is accomplished using a voice/data modem (modulator/demodulator) as now used with existing computing systems. The modem is either built-in to the host computer or it can be inserted as a "PCMCIA" or "PC Card" into the host computer. In addition, communication means in the display can also utilize a built-in modem to interface through communications means to a remote device. Using the communication means of the system, data and voice can be transmitted and received between displays and mobile systems as well as between mobile systems.

Communicating large bandwidth, timing sensitive data such as computer graphic images, still or motion active video may utilize a more narrow band or even hard wire systems. Such systems can operate using multiple channels, data compression or both which will enable transmission of the above-mentioned data at real time speeds. The host computer will be used to communicate with another computer at a remote location. Each computer will serve users having displays that will display data and images and serve as activating devices to control the host computers. For example, if cellular telephones are used as wireless communication means, the computer would access the telephone number of a remote host computer, cellular or otherwise, and establish a connection. When data transmission between host computers is required, the user switches to data mode through a voice/data modem installed in the local host computer to establish data transmission. The dialing and switching sequences can be controlled by voice or other activation means by the host operator. This allows for the passing of voice input signals from the apparatus of this invention through to the telephone system while maintaining voice-activated computer control of the host through the telephone system. This interface may be integrated with in the computer apparatus of this invention, attached to it during manufacture or user installed. This approach provides seamless switching between voice and data transmission and reception between one or more distant locations without distracting from the task being performed by the individual using the computer apparatus of the present invention.

It goes without saying that the mobile computer of this invention may be interfaced with or used in connection with any desired computer local networks.

The display housing of this invention can optionally also have mouse control means included in the event a hands-free activation usage is not required; however, this is an optional feature of the present invention. Obviously, peripheral ports or external jacks could also be positioned in the flat panel display housing for attachment thereto of any desired option such as pen activation means or others.

The speaker in the present invention critically located on one end of the display housing can be used as in any computer unit such as desktop computer speakers, i.e. to provide audio enhancement, i.e. prompts and background sounds, including music, which support and/or enhance software and multimedia applications. The speaker can also be used as the ear piece if the housing is to be used as a cellular telephone.

The specifically located microphone in the display housing in this invention can be used as the voice activation means giving computer commands in this hand-free computer system. As noted earlier, it is critical to this invention that the microphone be placed so as to eliminate or at least minimize sound interference from the speaker. The microphone also can be used as the mouth piece when the flat panel display is used as a cellular telephone.

While it is highly preferred that the microphone and speaker be an integral part of the display housing, the microphone and speaker can be detachable if desirable, however, it is critical to the invention that both audio or audio connection means of microphone and speaker be provided in the housing of the display of this invention.

Also, a pen device is optionally used in the present invention as a point device to manipulate or point a mouse when the system is not totally used in a voice activation mode. It should be understood, however, that the pen is not a required component of the present invention. Correspondingly, mouse controls may be optionally added on the display housing to accommodate other than hands-free use; also this is not a required component of the present invention but rather an option.

Further features of the invention are outlined and shown in the following description and the drawings.

The invention is now explained in greater detail with reference to the embodiments illustrated in the drawings. The reference numbers and terms given in the list of reference numbers at the end of this text are used in the description, the claims and the drawings to denote the same parts.

The drawings illustrate the following:
- Fig. 1: is a perspective top view of the flat panel display of this invention when it is worn by a user;
- Fig. 2: is a plan top view of the flat panel display of this invention with the optional use of a pen to manipulate a mouse when not voice activated;
- Fig. 3: is a side perspective view of the display housing of this invention;
- Fig. 4: is a top-side perspective view of the flat panel display unit of this invention when not worn and showing the curved bottom surface;
- Fig. 5: is a bottom side perspective view of the display housing of the flat panel display of this invention;
- Fig. 6: is a top perspective view of the display housing, arm attachment means and optional pen pointing means of this invention;
- Fig. 7: is a bottom-side perspective view of the display housing and arm attachment means of the flat panel display of this invention and
- Fig. 8: is a front perspective view of the display housing of this invention showing the strap loops through which the arm attaching means are connected to the housing.

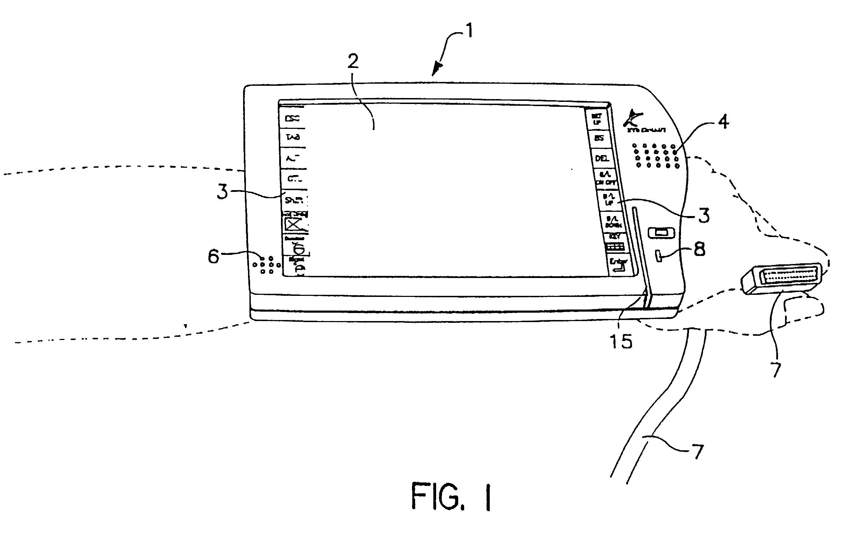

In Figure 1 is shown a flat panel display 1 having a display window 2 having computer function keys 3 on both side portions thereof. These function keys 3 control various aspects of the display such as contract control, keyboard function keys, "Not Drag" key, i.e., since there is no mouse on the panel and a pen cannot duplicate the functions that a mouse usually has, there is a need to duplicate those mouse functions by way of the above keys. The "Not Drag" key actually equals a single click function on a mouse, the "double" key a double click on a mouse, and the "right" key, a right click on the mouse. While these keys are rarely used when the system is in the voice activation mode, they could be helpful in some usages. The drawing illustrates keys on the left side reading down: ESC, TAB, ALT, CTL, SHIFT, NOT DRAG, DOUBLE, and RIGHT. On the right side, the keys are SET UP, BS, DEL, B/L ON-OFF, B/L DOWN, KEY, and ENTER.

The computer function keys 3 are just illustrative, any suitable keys or key functions may be used in the present invention. A speaker means 4 is located on one end of display housing 5 and a microphone 6 is located apart from said speaker means 4. The microphone 6 and speaker means 4 may be positioned on the display housing 5 at locations that minimize or cancel echoes of either audio component, for instance speaker means 4 and or microphone means 6; this is a critical feature of the present display unit 1. Any conventional or known display window 2 may be used, however, it is preferred that display window 2 have light sensitizing means that control back light and make the display window 2 day light readable. A connecting means 7 is provided for connection of the display unit 1 to a not shown central processing unit or CPU in the hands-free voice activated system.

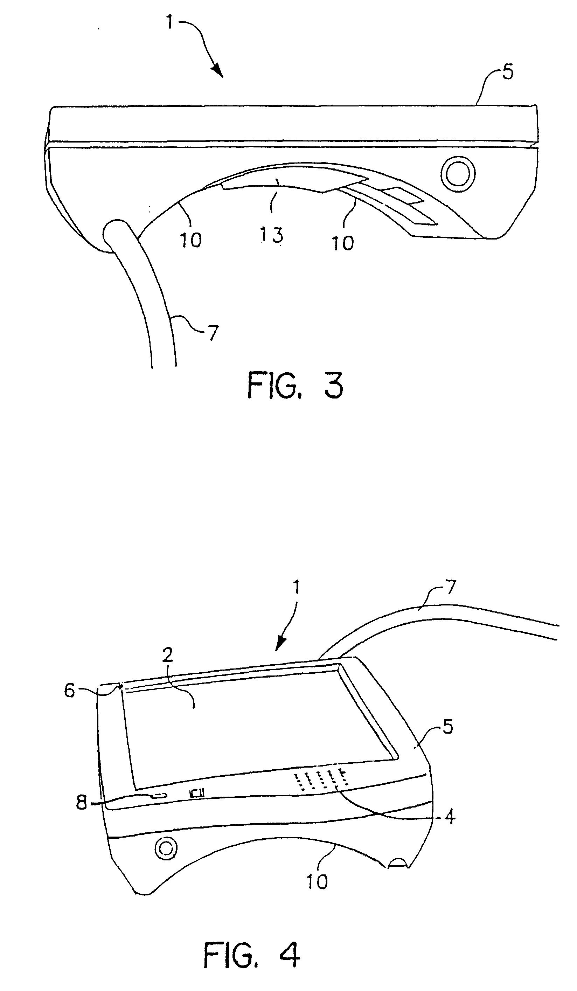

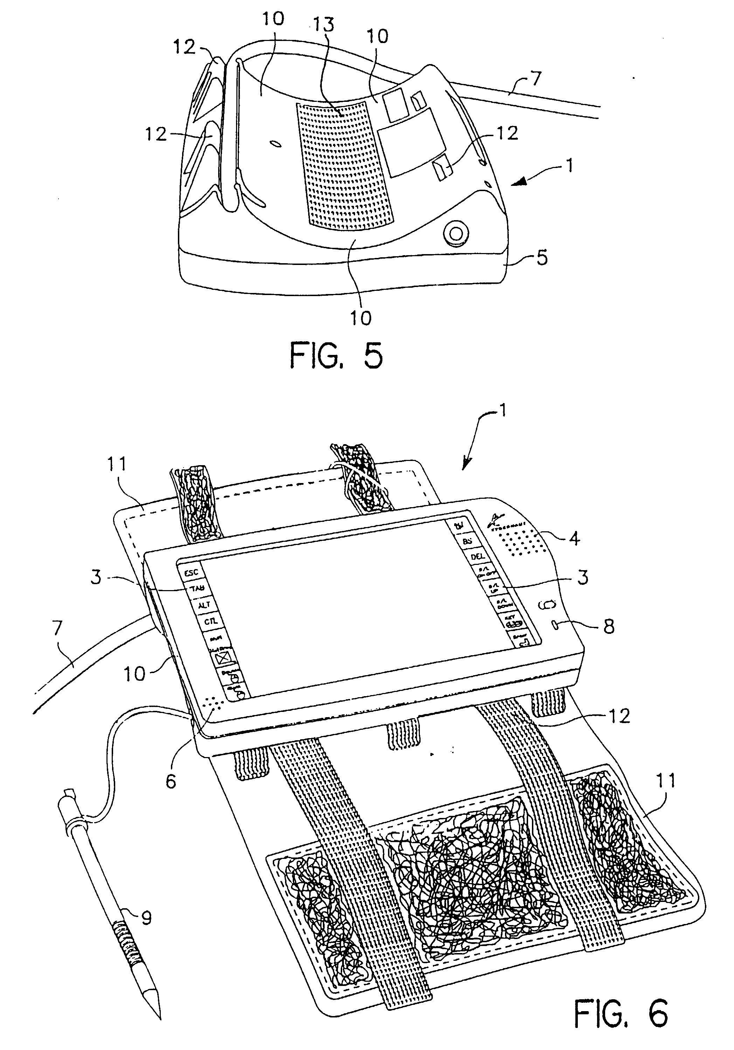

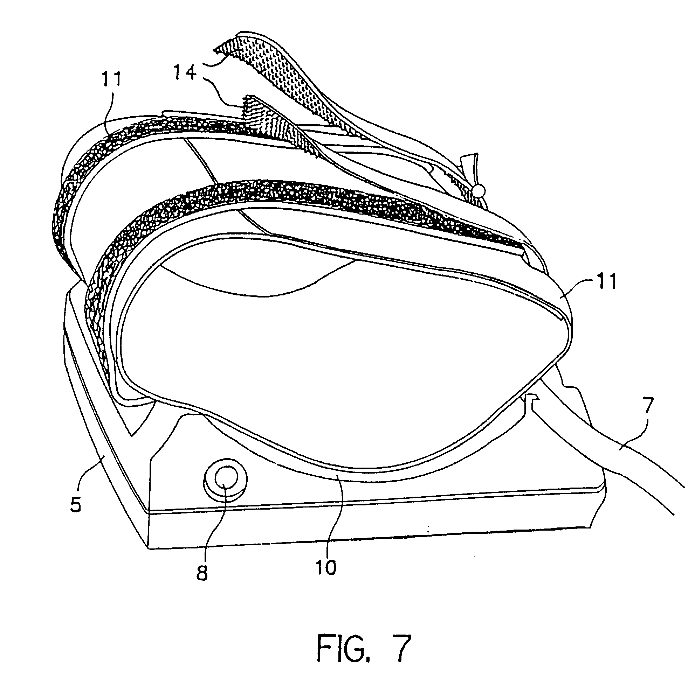

In Figure 2 a flat panel display 1 is shown lying on a flat surface while not being worn. The display window 2 has computer function keys 3 on the two sides of the display window 2; these keys control various aspects of the system as earlier noted. When the display unit 1 is used only in the voice activation mode the computer function keys 3 can be eliminated as shown in Figure 4. Also in Figure 2 , a slot 15 is provided so that a credit card when it is passed therethrough will be read as the magnetic strip passes through slot 15. If desired, a bar code reader can also be used in the housing of this invention. While not worn around the arm or wrist, display unit 1 may be worn in a pocket, pouch or holster. It is preferred however that the flat panel display 1 be worn around the wrist so as to provide hands-free operation when using the voice activation system embodiment. Note that speaker means 4 is located on the display housing 5 so as not to interfere with voice activation or microphone means 6. Peripheral ports 8 can be located on display housing 5 at any location for electrical connection of any peripheral means (such as a keyboard connection, a mouse or a cable to a microphone) to display unit 1. A pen pointer 9 is optionally used in the system of the present invention. In Figures 3 and 4 a side view of the display housing 5 is shown having a bottom curved surface 10 to accommodate wearing of the display unit 1 on the wrist or arm of a user. A flexible belt or band 11 (shown in Figures 6 and 7) is attached to curved surface 10 to facilitate wearing of display unit 1 on the arm of the user. In Figure 4, the optional control keys 3 are not shown since the unit 1 when used in the voice activated mode does not require control keys 3 for operation. In Figure 5, a bottom view of the flat panel display 1 is illustrated having a curved bottom surface 10 including belt loops 12 for attachment of flexible band 11 thereto. An adhesive strip 13 may also be placed on a curved surface 10 to further facilitate attachment of flexible band 11 thereto.

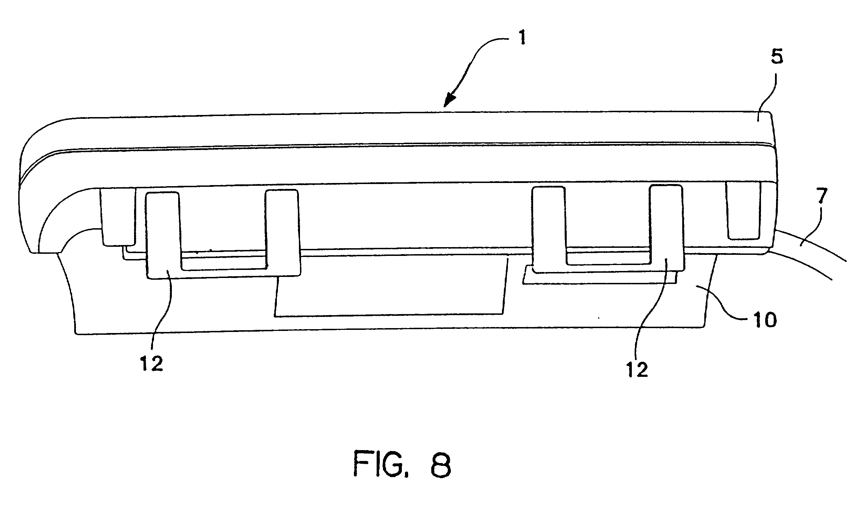

In Figure 6 the display unit 1 is seen being prepared to be worn around the arm of a user. Flexible band 11 is threaded through belt loops 12 which are located along curved bottom surface 10. Once connected to the bottom surface 10 of the display unit 1, the flexible band 11 is wrapped around a user's arm or wrist and cable 7 is connected to the CPU unit. Any type of adhesive or attachment means 14 may be used to secure one end of flexible band 11 to the opposite end when worn. Figure 7 shows the flexible band 11 after connected or secured to the curved bottom surface 10 of display unit 1 and ready to be worn on a user's arm. Again, the flat panel display 1 may be carried in a pouch or other means being worn by a user. In Figure 8, a bottom side view of the display unit 1 is shown having bottom belt loops 12 to receive the flexible band 11. Obviously when the display unit 1 is carried in a pouch or holster the use of a flexible band 11 and belt loops 12 are not required.

The preferred and optimumly preferred embodiments of the present invention have been described herein and shown in the accompanying drawings to illustrate the underlying principles of the invention, but it is to be understood that numerous modifications and ramifications may be made without departing from the spirit and scope of this invention.

### List of reference numbers

1 flat panel display; display unit
2 display window
3 computer function keys; control keys
4 speaker means
5 display housing
6 microphone (means)
7 connecting means; cable
8 peripheral ports
9 pen pointer
10 curved bottom surface
11 flexible belt or band
12 belt loops
13 adhesive strip
14 attachment means
15 slot

## Claims

1. Flat panel display, particularly used with mobile body worn computers, characterized by
combination of means to be used in a voice activated computer system, a flat panel display window (2), an audio-acoustics means, and a display housing (5), the flat panel display (1) having connection means (7) to a CPU in a computer system, said display housing (5) comprising said audio-acoustics means including a microphone (6) and a speaker (4), said microphone (6) positioned in said display housing (5) at a location that will minimize sound interference with said speaker (4), said microphone (6) having means whereby audio commands will be transmitted to said CPU, said display window (2) in communication with said CPU for receiving information from said CPU and for displaying the received information for the user, the flat panel display (1) having means whereby the user may operate the computer system in a hands-free manner utilizing at least in part audio commands.

2. Flat panel display, particularly used with mobile body worn computers, characterized by
combination in a display housing (5), a display window (2), and audio means, said audio means comprising a microphone (6) and a speaker (4), said microphone (6) and speaker (4) both positioned in said display housing (5) at separate locations that will minimize sound interface between them, said flat panel display (1) having connection means (7) to a CPU in a computer system, said microphone (6) having means for communicating audio commands to said CPU to operate said computer system in a hands-free manner, said display window (2) in communication with said CPU for receiving information from said CPU and for displaying the received information for said user, said computer system having means to convert said audio commands into electrical signals and for communicating said electrical signals to said CPU for processing and to said flat panel display (1) for displaying.

3. Flat panel display of claim 1 or 2, characterized in,
that the display housing (5) has means for being supported by a user.

4. Flat panel display of claim 1 or 2, characterized in,
that the display housing (5) has means for attachment to a user's arm.

5. Flat panel display of claim 1 or 2, characterized in,
that the display housing (5) has means (4, 6, 8) whereby said display window (2) can be used with or without audio commands, and can be used with or without an optional mouse control.

6. Flat panel display of claim 1 or 2, characterized in,
that the display housing (5) has a curved bottom surface (10) to accommodate attachment to a user's arm.

7. Flat panel display of claim 1 or 2, characterized in,
that the display housing (5) has means (12) for connection to a flexible belt or band (11) adapted to be wrapped around a user's arm.

8. Flat panel display of claim 1 or 2, characterized in,
that the display housing (5) has means or a slot (15) therein for reading bar codes and/or for reading magnetic credit cards respectively.

9. Flat panel display of claim 1 or 2, characterized in,
that the display housing (5) has adhesive strips (13) and/or attachment means (14) thereto.

10. Flat panel display of claim 1 or 2, characterized in,
that the display housing (5) has peripheral ports (8) for attachment or connection thereto of any desired peripheral.
